# FASCICULE DE BREVET EUROPEEN

(11) **EP 2 381 821 B1**
(45) Date de publication et mention de la délivrance du brevet: **08.05.2019**
(21) Numéro de dépôt: 09802190.0
(22) Date de dépôt: 16.12.2009
(51) Int. Cl.: A47J 27/09

(54) **APPAREIL DE CUISSON SOUS PRESSION AVEC DES ORGANES DE COMMANDE INTERDEPENDANTS**
DAMPFKOCHVORRICHTUNG
PRESSURE COOKER DEVICE

(30) Priorité: 30.12.2008 FR 0859145
(43) Date de publication de la demande: 02.11.2011
(73) Titulaire: SEB S.A., 69130 Ecully (FR)
(72) Inventeur: CHAMEROY, Eric, F-21260 Veronnes (FR); CARTIGNY, Michel, Pierre, F-21310 Mirebeau (FR)
(74) Mandataire: Weber, Jean-François
(86) Numéro de dépôt international: PCT/FR2009/052573
(87) Numéro de publication internationale: WO 2010/076506

(56) Documents cités:
- GB-A- 2 182 583
- GB-A- 2 182 583
- US-A- 2 308 320
- US-A- 2 308 320
- US-A- 2 594 584
- US-A- 2 594 584

## Description

### DOMAINE TECHNIQUE

La présente invention se rapporte au domaine technique général des appareils de cuisson sous pression, et en particulier des appareils domestiques du genre autocuiseurs, comprenant une cuve et un couvercle destiné à être verrouillé sur la cuve pour former une enceinte de cuisson sensiblement étanche, lesdits appareils étant destinés à assurer la cuisson sous pression de vapeur d'aliments contenus dans la cuve.

La présente invention concerne plus particulièrement un appareil de cuisson d'aliments sous pression comprenant une cuve, un couvercle, un premier organe permettant à un utilisateur de commander le verrouillage / déverrouillage du couvercle relativement à la cuve et un deuxième organe permettant à un utilisateur d'agir sur le niveau de pression dans l'appareil, lesdits premier et deuxième organes étant mobiles l'un relativement à l'autre.

### TECHNIQUE ANTERIEURE

On connaît déjà des appareils de cuisson sous pression comprenant une cuve et un couvercle destiné à être verrouillé sur la cuve par l'intermédiaire d'un moyen de verrouillage / déverrouillage susceptible d'évoluer entre une position de verrouillage du couvercle et une position de déverrouillage.

Un tel moyen de verrouillage / déverrouillage met par exemple en oeuvre une pluralité de mâchoires de verrouillage solidaires de bras entraîneurs disposés radialement sur le couvercle et dont le déplacement est commandé par un organe de commande monté sur le couvercle.

L'utilisateur peut ainsi actionner l'organe de commande pour assurer le déplacement radial des mâchoires, soit en direction centrifuge, soit en direction centripète, pour positionner les mâchoires respectivement en position de déverrouillage ou en position de verrouillage.

On connaît en particulier un appareil de cuisson sous pression dont l'organe de commande du verrouillage / déverrouillage est constitué par deux boutons poussoirs montés à translation sur le couvercle selon respectivement la direction verticale et la direction horizontale. L'utilisateur peut ainsi commander le déplacement radial centrifuge des mâchoires en pressant le bouton poussoir à course horizontale, et inversement commander le déplacement radial centripète des mâchoires en pressant le bouton poussoir à course horizontale.

Cet appareil de l'art antérieur comporte également un organe de pilotage du fonctionnement de l'appareil, qui permet à l'utilisateur de placer l'appareil dans un mode de fonctionnement spécifique parmi les modes suivants :
- un mode de fuite, dans lequel l'enceinte de cuisson est mise en communication avec l'extérieur, en vue de faire chuter la pression à l'intérieur de l'appareil en fin de cuisson, ou au contraire d'empêcher la pression de monter au sein de l'appareil ;
- et une pluralité de modes de cuisson, correspondant chacun à une pression de régulation particulière, plus ou moins importante et destinée à certains types d'aliments.

Cet organe de pilotage du fonctionnement de l'appareil de cuisson sous pression est constitué, dans l'appareil de l'art antérieur précité, par une couronne montée à rotation autour d'un axe vertical correspondant à l'axe de translation du bouton poussoir permettant de commander le déplacement radial centripète des mâchoires.

L'axe vertical en question correspond d'ailleurs à l'axe de symétrie général de la cuve, et il passe ainsi par le centre du couvercle, perpendiculairement à ce dernier, ainsi que par le centre du fond de cuve. La couronne rotative formant l'organe de pilotage du fonctionnement de l'autocuiseur est ainsi conçue pour tourner sur le couvercle entre une position d'ouverture permettant de ramener ou de maintenir la pression régnant dans l'enceinte de cuisson à une valeur compatible avec un déverrouillage sécurisé du couvercle, sans risque de voir ce dernier échapper brutalement sous l'effet de la pression, et une pluralité de positions de cuisson correspondant chacune à une pression de fonctionnement spécifique, régulée par une soupape de régulation. Plus précisément, dans cet appareil de l'art antérieur, la couronne rotative interagit avec la soupape de régulation pour modifier le tarage de cette dernière. Cette couronne de sélection de pression permet ainsi de sélectionner trois positions de cuisson correspondant à trois tarages différents de la soupape, et une position d'ouverture correspondant à un tarage minimal de la soupape permettant à cette dernière de s'ouvrir dès qu'une pression extrêmement basse, compatible avec l'ouverture sécurisée du couvercle, règne dans l'enceinte de cuisson.

Cet autocuiseur de l'art antérieur donne globalement satisfaction, ce qui n'empêche pas qu'il pourrait néanmoins être encore amélioré.

Ainsi, l'utilisateur peut commettre différentes erreurs d'utilisation.

Par exemple, l'utilisateur peut placer le sélecteur de pression sur une position de cuisson en oubliant de verrouiller le couvercle. Un tel oubli n'aura pas de conséquence en matière de sécurité, dans la mesure où cet autocuiseur de l'art antérieur est pourvu d'un moyen de sécurité à la mauvaise fermeture, bien connu en tant que tel, permettant d'empêcher la montée en pression de l'enceinte de cuisson au-delà d'une valeur de pression compatible avec l'ouverture sécurisée du couvercle.

Il n'en reste pas moins que cela peut générer une perte de temps importante pour l'utilisateur, qui peut croire pendant un long moment que le processus de cuisson est en cours alors qu'il n'a pas même démarré du fait de son oubli de verrouillage du couvercle.

Inversement, l'utilisateur peut tenter de déverrouiller le couvercle de la cuve par pression sur le bouton poussoir horizontal alors que la pression régnant dans l'enceinte de cuisson est encore importante, et incompatible avec une ouverture sécurisée du couvercle. Là encore, une telle tentative de déverrouillage du couvercle alors que l'enceinte est pressurisée est sans incidence sur le plan de la sécurité, dans la mesure où cet appareil de l'art antérieur est bien entendu pourvu, selon les normes en vigueur, d'une sécurité à l'ouverture permettant d'empêcher le déverrouillage du couvercle tant que la pression régnant dans l'enceinte de cuisson n'est pas revenue à un niveau compatible avec une ouverture sécurisée du couvercle. Un tel organe de sécurité à l'ouverture comprend généralement une tige coulissante sensible à la pression et susceptible de se trouver soit dans une position haute tant que la pression dans l'enceinte excède un niveau prédéterminé de sécurité, soit dans une position basse une fois la pression revenue en deçà dudit niveau de sécurité. En position haute, la tige vient bloquer le mécanisme de verrouillage / déverrouillage en s'opposant ainsi à l'effort de poussée exercé par l'utilisateur sur le bouton poussoir à translation horizontale. Cela suppose donc que le mécanisme de verrouillage / déverrouillage, de même que la tige formant le moyen de sécurité à l'ouverture, présentent une résistance mécanique suffisante pour empêcher l'utilisateur de parvenir malgré tout à enfoncer le bouton poussoir et ainsi déverrouiller le couvercle. A cet égard, il est bien entendu absolument impératif que le mécanisme de verrouillage / déverrouillage et la tige de sécurité à l'ouverture résistent à l'effort exercé par l'utilisateur même si ce dernier est important, car toute défaillance mécanique d'un composant, et par exemple de la tige, conduirait à un déverrouillage du couvercle alors que l'enceinte est sous pression, avec toutes les conséquences catastrophiques qui en découleraient. C'est pourquoi, la conception et le dimensionnement de l'ensemble des pièces concernées sont effectués de façon extrêmement prudente par les fabricants d'autocuiseurs, avec des coefficients de sécurité importants. Une telle contrainte sécuritaire, si elle est bien entendu nécessaire compte-tenu de la construction de ces appareils de l'art antérieur, constitue toutefois un inconvénient sérieux en matière d'industrialisation et de coût de revient. Cette contrainte sécuritaire restreint également grandement la liberté de conception. En particulier, il est nécessaire que l'organe de commande du verrouillage / déverrouillage n'accroisse pas, par exemple par un effet de bras de levier, l'effort exercé par l'utilisateur sur le moyen de déverrouillage (constitué en l'espèce par le bouton poussoir horizontal). Ceci limite les possibilités de conception, empêchant ainsi certaines conformations et fonctionnement de l'organe de commande du verrouillage / déverrouillage qui pourraient pourtant s'avérer plus pratiques et ergonomiques, sauf à pratiquer des surdimensionnements alourdissant l'appareil et augmentant son prix de revient.

Afin de répondre au moins en partie à certains des inconvénients mentionnés précédemment, il a par la suite été proposé un appareil de cuisson sous pression pourvu d'un organe rotatif de commande unique permettant de commander à la fois le verrouillage / déverrouillage du couvercle relativement à la cuve et la sélection d'une position de pression et d'une position de décompression. Un tel appareil évite ainsi à l'utilisateur de sélectionner une position de cuisson sans verrouiller le couvercle. En effet, le verrouillage du couvercle et la sélection de la position de cuisson sont effectués en une seule et même opération, par rotation de l'organe de commande unique.

Cependant, le recours à un tel organe de commande unique implique une conception très spécifique, qui interdit en particulier de pouvoir sélectionner plusieurs positions de cuisson correspondant chacune à un tarage différent de la soupape de régulation, sauf à recourir à une conception extrêmement complexe et peu pratique à utiliser.

On connaît du document US-2,308,320 un cuiseur sous pression qui met en oeuvre une bride de serrage commandée par un levier de verrouillage, lequel est lui-même pourvu d'un anneau pivotant destiné à rabattu autour d'un tube porté par le couvercle, ledit tube étant destiné à être coiffé par un corps de soupape à poids.

Les objets assignés à l'invention visent en conséquence à porter remède aux divers inconvénients énumérés précédemment et à proposer un nouvel appareil de cuisson d'aliments sous pression dont la conception, tout en étant particulièrement simple et bon marché, en facilite l'utilisation et en améliore la sécurité.

Un autre objet de l'invention vise à proposer un nouvel appareil de cuisson d'aliments sous pression dont la construction globale est allégée, en particulier en ce qui concerne le mécanisme de commande du déverrouillage du couvercle et le moyen de sécurité à l'ouverture, ladite construction autorisant en outre une grande liberté dans la conception de l'organe de commande du verrouillage / déverrouillage du couvercle relativement à la cuve.

Un autre objet de l'invention vise à proposer un nouvel appareil de cuisson d'aliments sous pression dont l'utilisation est particulièrement simple et intuitive.

Un autre objet de l'invention vise à proposer un nouvel appareil de cuisson d'aliments sous pression permettant d'éviter que l'utilisateur lance un cycle de cuisson alors que la cuve est mal fermée par le couvercle.

Un autre objet de l'invention vise à proposer un nouvel appareil de cuisson d'aliments sous pression de conception extrêmement simple et robuste.

Un autre objet de l'invention vise à proposer un nouvel appareil de cuisson d'aliments sous pression particulièrement ergonomique et pratique.

Un autre objet de l'invention vise à proposer un nouvel appareil de cuisson d'aliments sous pression mettant en oeuvre un minimum de pièces et dont le fonctionnement est particulièrement simple à comprendre et intuitif.

Les objets assignés à l'invention sont atteints à l'aide d'un appareil de cuisson d'aliments sous pression conforme à l'objet de la revendication 1.

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :
- La figure 1 illustre, selon une vue générale en perspective, un premier mode de réalisation d'un appareil de cuisson d'aliments sous pression conforme à l'invention avec son premier organe en position de verrouillage, et son deuxième organe en position de cuisson.
- La figure 2 illustre, selon une vue en perspective, un détail de réalisation des premier et deuxième organes de l'appareil illustré à la figure 1.
- La figure 3 illustre, selon une vue de dessus, le détail de réalisation de la figure 2.
- La figure 4 illustre, selon une vue générale en perspective, l'appareil de la figure 1 dont le premier organe est toujours en position de verrouillage mais dont le deuxième organe se trouve cette fois en position de cuisson.
- La figure 5 illustre, selon une vue en perspective, un détail de réalisation des premier et deuxième organes de l'appareil illustré à la figure 4.
- La figure 6 illustre, selon une vue en perspective, le détail de réalisation de la figure 2 lorsque le premier organe a quitté sa position de verrouillage et est en cours de déplacement vers sa position de déverrouillage.
- La figure 7 illustre, selon une vue de dessus, le détail de réalisation de la figure 6, le premier organe étant omis par souci de clarté.
- La figure 8 illustre, selon une vue générale en perspective, l'appareil des figures 1 à 7 avec le premier organe en position de déverrouillage.
- La figure 9 illustre, selon une vue en perspective, un détail de réalisation des premier et deuxième organes de l'appareil illustré à la figure 8.
- La figure 10 illustre, selon une vue de dessus, le détail de réalisation de la figure 9, le premier organe étant omis par souci de clarté,
- La figure 11 illustre, selon une vue en coupe, le détail de réalisation de la figure 9.
- La figure 12 illustre, selon une vue en perspective, le détail de réalisation des figures 9 à 11 lorsque le premier organe a quitté sa position de déverrouillage et est en cours de déplacement vers sa position de verrouillage.
- La figure 13 illustre, selon une vue de coté, le détail de réalisation de la figure 12, le premier organe étant sur le point d'atteindre sa position de verrouillage.
- La figure 14 illustre, selon une vue de dessus, le détail de réalisation de la figure 13, le premier organe étant omis par souci de clarté.
- La figure 15 illustre, selon une vue en perspective, un détail de réalisation des premier et deuxième organes d'un appareil conforme à un deuxième mode de réalisation de l'invention, le premier organe étant en position de déverrouillage tandis que le deuxième organe est en position d'ouverture, l'appareil en question étant identique à celui des figures 1 à 14 à la différence près qu'il est conçu pour que le premier organe, lorsqu'il se trouve en position de déverrouillage, bloque le deuxième organe en position d'ouverture.
- La figure 16 illustre, selon une vue en perspective, le détail de la figure 15, le premier organe étant en position de verrouillage tandis que le deuxième organe est en position d'ouverture.
- La figure 17 est similaire à la figure 16 à la différence que le premier organe n'est pas représenté, par souci de clarté.

### MEILLEURE MANIERE DE REALISER L'INVENTION

L'appareil 1 de cuisson d'aliments sous pression conforme à l'invention est destiné à assurer la cuisson de différents aliments à un niveau de pression supérieur à la pression atmosphérique, de préférence dans un contexte domestique, étant entendu que l'invention peut également concerner des appareils professionnels ou semi-professionnels.

L'appareil 1 conforme à l'invention est donc avantageusement un ustensile de cuisine présentant un caractère portatif (c'est-à-dire qu'il peut être déplacé manuellement) et indépendant. De façon classique, l'appareil 1 conforme à l'invention est conçu pour monter en pression exclusivement sous l'effet d'une source de chauffe (embarqué ou externe), sans apport de pression externe.

De façon particulièrement préférentielle, l'appareil 1 de cuisson conforme à l'invention est un autocuiseur.

De façon classique, l'appareil 1 de cuisson sous pression conforme à l'invention comprend une cuve 2 formant récipient de cuisson et présentant avantageusement sensiblement une symétrie de révolution selon un axe X-X'. Par la suite, l'adjectif *« axial* » se référera à la direction de cet axe de symétrie X-X', direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable, et est par exemple pourvu d'un fond thermo-conducteur 2A solidarisé à la cuve par toute technique appropriée (par exemple par frappe à chaud). La cuve 2 peut comporter également des organes de préhension, tel que des poignées 2B, 2C préférentiellement au nombre de deux, et fixées sur la paroi latérale 2D de la cuve de façon diamétralement opposée par exemple.

L'appareil 1 conforme à l'invention comprend également un couvercle 3 destiné à être rapporté et verrouillé sur la cuve 2 pour former avec cette dernière une enceinte de cuisson sensiblement étanche, c'est-à-dire suffisamment hermétique pour permettre une montée en pression de l'appareil 1.

Le couvercle 3 est de préférence de forme générale discoïde, et s'étend avantageusement dans un plan moyen sensiblement parallèle au plan moyen d'extension du fond 2A de la cuve 2 lorsqu'il est rapporté et verrouillé sur cette dernière.

Le couvercle 3 est conçu pour être verrouillé ou déverrouillé sur la cuve 2 grâce à un moyen de verrouillage / déverrouillage 4 du couvercle 3 relativement à la cuve 2. Le verrouillage du couvercle 3 sur la cuve 2 permet à l'enceinte de cuisson de monter en pression sans risque de voir le couvercle 3 échapper brutalement sous l'effet de la pression. Le moyen de verrouillage / déverrouillage 4 peut être de tout type connu de l'homme du métier, et est de façon classique susceptible d'évoluer entre une position verrouillée dans laquelle le couvercle 3 est solidarisé à la cuve 2, et une position déverrouillée dans laquelle le couvercle 3 peut être librement séparé de la cuve 2. A titre d'exemple d'un tel moyen de verrouillage / déverrouillage 4 utilisable dans le cadre de l'invention, on peut citer un moyen de verrouillage / déverrouillage à mâchoires ou à segments, étant entendu que l'invention n'est nullement limitée à un type particulier de moyen de verrouillage / déverrouillage 4. Dans la variante préférentielle illustrée aux figures, le moyen de verrouillage / déverrouillage 4 du couvercle 3 relativement à la cuve 2 comprend deux mâchoires 4A, 4B montées mobiles en translation radiale sur et relativement au couvercle 3 par l'intermédiaire de bras entraîneurs correspondants 4C, 4D s'étendant de façon diamétralement opposée en regard de l'axe de symétrie général X-X' de l'appareil 1. Les mâchoires 4A, 4B sont ainsi montées, par l'intermédiaire des bras entraîneurs 4C, 4D, entre d'une part une position verrouillée dans laquelle chaque mâchoire 4A, 4B enserre le couvercle 3 et le bord supérieur roulé de la cuve 2 et d'autre part une position de déverrouillée, obtenue par déplacement centrifuge des mâchoires 4A, 4B à partir de leur position verrouillée, et dans laquelle les mâchoires 4A, 4B ne sont plus en prise avec le bord roulé de la cuve 2, ce qui permet à l'utilisateur de désolidariser librement le couvercle 3 de la cuve 2. De préférence, la position verrouillée est une position de rappel, un tel effet de rappel étant obtenu par exemple grâce à l'interposition d'un ressort reliant les bras entraîneurs 4C, 4D et rappelant ces derniers l'un vers l'autre. Chaque bras entraîneur 4C, 4D s'étend plus précisément entre une extrémité intérieure destinée à coopérer avec un organe de commande du verrouillage / déverrouillage (qui sera décrit plus en détails ci-après) et une extrémité extérieure qui porte la mâchoire correspondante 4A, 4B. Chaque mâchoire 4A, 4B se présente quant à elle avantageusement sous la forme d'une plaque métallique profilée en U, tel que cela est bien connu de l'homme du métier. Il est cependant tout à fait envisageable que l'extrémité extérieure de chaque segment 4C, 4D ne porte pas de mâchoire et soit simplement destinée à pénétrer dans des lumières correspondantes ménagées dans la cuve, à la manière d'un système pêne/gâche. Un tel système de verrouillage de type pêne/gâche (non illustré), habituellement désigné sous l'appellation « *système de verrouillage* à *segments* », est bien connu en tant que tel, de sorte qu'il n'est pas nécessaire de le décrire plus avant.

Comme évoqué précédemment, l'appareil de cuisson d'aliments 1 conforme à l'invention comprend un premier organe 6 permettant à un utilisateur de commander le verrouillage / déverrouillage du couvercle 3 relativement à la cuve 2. Le premier organe 6 constitue ainsi un organe de commande du verrouillage / déverrouillage du couvercle 3 relativement à la cuve 2. Ce premier organe 6 est manipulable, de préférence directement, par l'utilisateur, c'est-à-dire qu'il est spécifiquement conçu pour être actionné manuellement par l'utilisateur de façon à permettre à ce dernier de contrôler, de préférence directement, le moyen de verrouillage / déverrouillage 4, et de préférence le déplacement radial des bras entraîneurs 4C, 4D et des mâchoires correspondantes 4A, 4B.

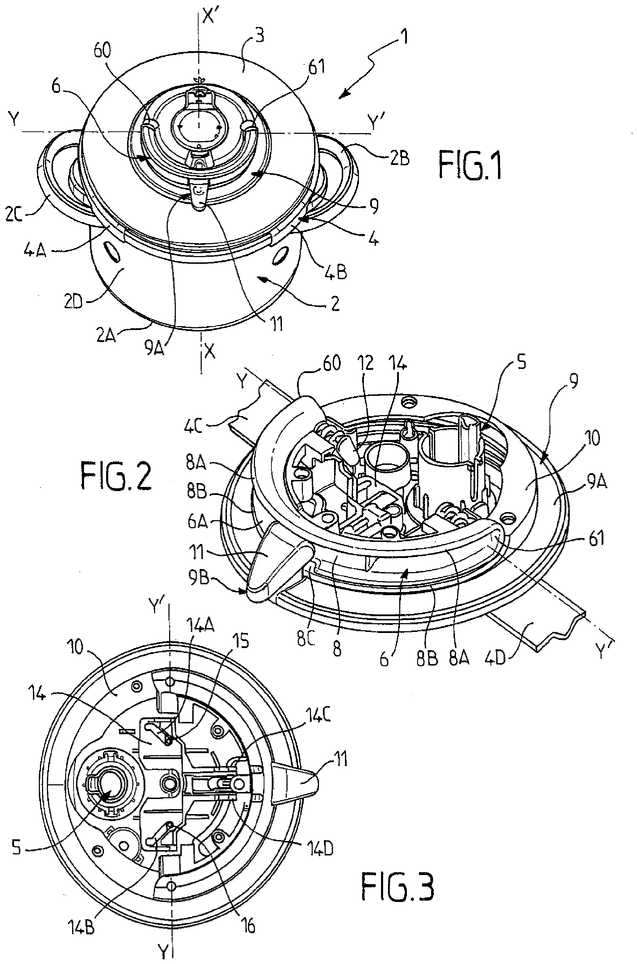

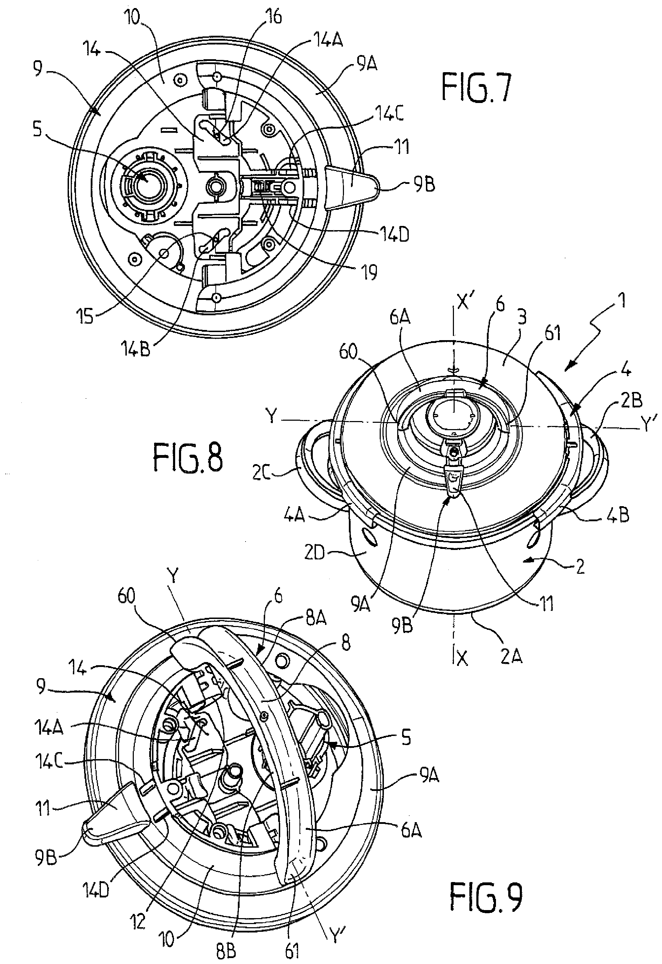

Avantageusement, le premier organe 6 est ainsi mobile entre au moins une position de verrouillage du couvercle 3 relativement à la cuve 2 (visible aux figures 1, 2, 4 et 5) correspondant au verrouillage du couvercle 3 sur la cuve 2 et une position de déverrouillage du couvercle 3 relativement à la cuve 2 (visible aux figures 8, 9 et 11) correspondant au déverrouillage du couvercle 3 relativement à la cuve 2. Ainsi, le premier organe 6 est conçu pour pouvoir être déplacé manuellement par un utilisateur entre sa position de verrouillage et sa position de déverrouillage, et vice-versa. Le premier organe 6 interagit avec le moyen de verrouillage / déverrouillage 4 pour que lorsque ledit premier organe 6 se trouve dans sa position de déverrouillage, le moyen de verrouillage / déverrouillage 4 se trouve quant à lui en position déverrouillée, c'est-à-dire que le couvercle 3 peut être librement rapporté sur, et enlevé de, la cuve 2, tandis que lorsque le premier organe 6 se trouve dans sa position de verrouillage, le moyen de verrouillage / déverrouillage 4 adopte alors sa position verrouillée empêchant la désolidarisation du couvercle 3 de la cuve 2.

De préférence, comme illustré aux figures, le premier organe 6, qui est de préférence directement actionnable par l'utilisateur, est monté mobile relativement au couvercle 3, et de préférence est monté à pivotement sur le couvercle 3, selon un axe de pivotement Y-Y', entre ses positions de verrouillage et de déverrouillage. De préférence, l'axe de pivotement Y-Y' s'étend lui-même selon une direction moyenne majoritairement parallèle au plan moyen d'extension du couvercle 3. Dans les variantes préférentielles illustrées aux figures, le plan moyen d'extension du couvercle 3 est sensiblement parallèle au plan de la feuille sur laquelle sont dessinées les figures 3, 7, 10 et 14. Par « *direction moyenne majoritairement parallèle au plan moyen d'extension du couvercle 3* », on désigne donc une direction présentant une composante horizontale (perpendiculaire à l'axe X-X') supérieure à sa composante verticale (c'est-à-dire parallèle à l'axe X-X').

Ledit axe de pivotement Y-Y' est donc de préférence perpendiculaire à l'axe vertical X-X'. De façon avantageuse, afin en particulier de simplifier la conception globale de l'appareil 1, le premier organe 6 est centré sur le couvercle 3, de sorte que dans ce cas l'axe de pivotement Y-Y' est avantageusement sécant avec l'axe X-X'.

Avantageusement, l'organe de commande 6 est conçu pour se déplacer selon un débattement angulaire sensiblement égal à 90° entre une position rabattue, correspondant à la position de verrouillage, dans laquelle l'angle formé entre le plan moyen d'extension du couvercle 3 et le plan moyen d'extension du premier organe 6 est sensiblement nul, et une position dépliée, correspondant à la position de déverrouillage, dans laquelle l'angle entre le plan moyen d'extension du couvercle 3 et le plan moyen d'extension du premier organe 6 est sensiblement de 90°. La position de verrouillage correspond ainsi à une position rétractée du premier organe 6, tandis que la position de déverrouillage correspond à une position déployée de ce même premier organe 6.

Avantageusement, le premier organe 6 comprend une anse 6A, c'est-à-dire une pièce de préférence arquée, en forme de boucle, avantageusement conçue pour être saisie fermement et à pleine main par l'utilisateur.

L'anse 6A est avantageusement conçue pour faire saillie du couvercle 3 en position de déverrouillage (position déployée), et pour être rabattue contre le couvercle 3 en position de verrouillage (position rétractée), comme illustré aux figures. Le recours à un organe de commande 6 en forme d'anse 6A est préféré, car il permet une prise particulièrement ferme et assurée par l'utilisateur tout en étant facilement escamotable.

Avantageusement, et comme illustré aux figures, l'anse 6A s'étend selon un contour sensiblement hémicirculaire entre une première extrémité 60 et une deuxième extrémité 61 sensiblement traversées par ledit axe de pivotement Y-Y', lesdites première et deuxième extrémités 60, 61 étant ainsi disposées de façon sensiblement diamétralement opposées relativement à l'axe X-X'.

En d'autres termes, l'anse 6A présente dans ce cas sensiblement une forme d'arche correspondant avantageusement à un demi-cercle dont le diamètre est choisi pour permettre à un utilisateur de glisser, dans l'orifice 6B délimité par ladite arche et le couvercle 3, au moins deux doigts (par exemple l'index et le majeur), et de préférence au moins trois doigts (index, majeur et annulaire), un espace suffisant pour permettre l'introduction de quatre doigts (index, majeur, annulaire et auriculaire) étant préféré. Un contour de forme en arc de cercle, et en particulier hémicirculaire, est particulièrement confortable pour l'utilisateur et autorise en outre une sécurisation spécifique du fonctionnement d'un appareil qui sera décrit plus en détails ci-après. L'invention n'est bien entendu absolument pas limitée à un premier organe 6 en forme d'anse, ni même à un premier organe 6 pivotant sur le couvercle 3. Il est par exemple tout à fait envisageable, à titre de solution alternative, que le premier organe 6 soit monté à translation sur le couvercle et non à pivotement.

Avantageusement, le premier organe 6 présente un caractère unitaire et permet à un utilisateur de commander à la fois le verrouillage et le déverrouillage du couvercle 3 relativement à la cuve 2. En d'autres termes, l'utilisateur peut à l'aide d'un seul et même premier organe 6 commander à la fois le déplacement radial centrifuge et le déplacement radial centripète des mâchoires 4A, 4B. Il est cependant tout à fait envisageable que le premier organe 6 soit constitué de deux sous-organes distincts permettant de commander respectivement le verrouillage et le déverrouillage du couvercle 3 relativement à la cuve 2, sans pour autant que l'on sorte du cadre de l'invention.

L'appareil 1 de cuisson d'aliments sous pression conforme à l'invention comprend également un deuxième organe 9 permettant à un utilisateur d'agir sur le niveau de pression dans l'appareil 1. Le deuxième organe 9 constitue ainsi un organe de pilotage du fonctionnement de l'appareil 1, permettant à l'utilisateur de régler le niveau de pression régnant dans l'enceinte de cuisson formée par l'appareil 1 à un niveau prédéterminé, ce niveau pouvant par exemple être supérieur à la pression atmosphérique pour réaliser une cuisson d'aliments, ou être sensiblement égal, voire légèrement supérieur, à la pression atmosphérique pour permettre une ouverture sécurisée du couvercle 3, sans risque de voir ce dernier être projeté sous l'effet de la pression. L'expression « *valeur de pression compatible avec un déverrouillage sécurisé du couvercle* », vise donc ici une valeur de pression suffisamment basse pour éviter tout phénomène d'échappement brutal du couvercle lors de son déverrouillage par l'utilisateur, qui pourrait conduire à un danger corporel pour ce dernier. Une telle valeur de pression compatible avec un déverrouillage sécurisé du couvercle 3 est par exemple choisie pour ne pas excéder la pression atmosphérique d'une valeur supérieure à 4 kPa. Le deuxième organe 9 est, tout comme le premier organe 6, conçu pour être manipulé directement par l'utilisateur, qui peut ainsi actionner manuellement ledit organe 9 en vue d'agir sur le niveau de pression régnant dans l'enceinte de cuisson, par exemple pour permettre une montée en pression de l'enceinte jusqu'à un niveau prédéterminé, ou pour empêcher au contraire l'enceinte de monter significativement en pression, ou encore enfin pour dépressuriser l'enceinte de cuisson, cette liste de fonctionnalité n'étant bien entendu absolument pas limitative.

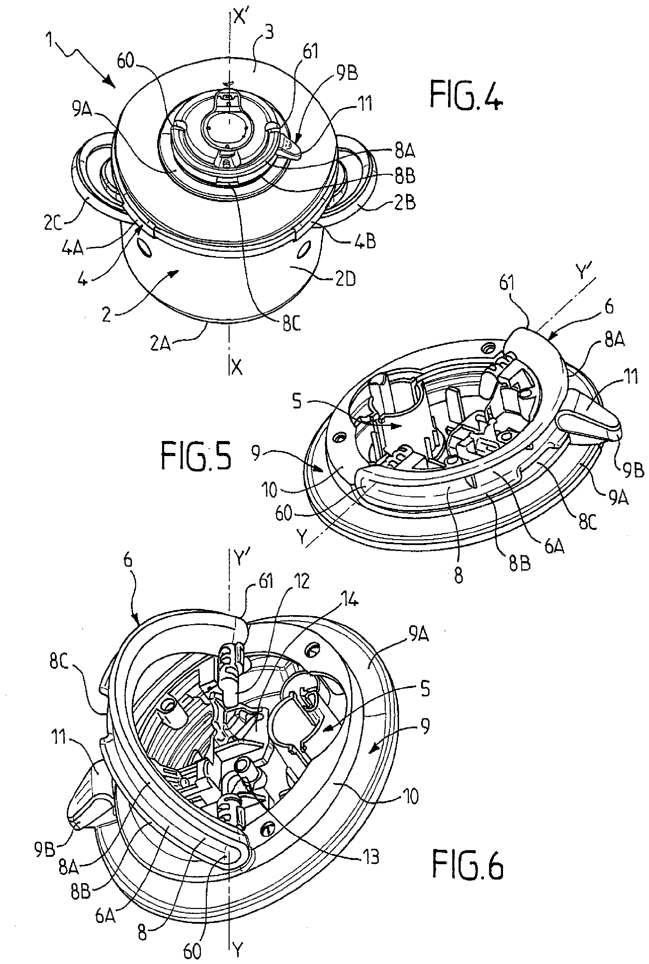

Avantageusement, le deuxième organe 9 est mobile entre au moins :
- d'une part une position d'ouverture (illustrée aux figures 1 à 3 et 6 à 14) permettant de ramener ou de maintenir la pression régnant dans l'enceinte de cuisson formée par la cuve 2 et le couvercle 3 à une valeur compatible avec un déverrouillage sécurisé du couvercle 3
- et d'autre part au moins une position de cuisson (illustrée aux figures 4 et 5) autorisant une montée en pression de ladite enceinte de cuisson jusqu'à une valeur de pression incompatible avec un déverrouillage sécurisé du couvercle 3 relativement à la cuve 2, mais permettant une cuisson rapide des aliments, sous pression de vapeur.

De préférence, le deuxième organe 9 est susceptible d'atteindre plusieurs positions de cuisson distinctes, correspondant chacune à une valeur de pression fonctionnement spécifique, destinée à un type particulier d'aliment.

Ainsi, l'utilisateur peut à volonté placer le deuxième organe 9 dans sa position d'ouverture, ou dans au moins une, et par exemple deux, trois ou quatre positions de cuisson différentes correspondant chacune à un niveau de pression prédéterminé spécifique. Lorsque le deuxième organe 9 se trouve dans une position de cuisson, la pression régnant dans l'enceinte de cuisson peut cette fois atteindre des valeurs beaucoup plus élevées, et par exemple excéder la pression atmosphérique d'une valeur comprise entre 10 et 90 kPa.

Le deuxième organe 9 constitue ainsi de préférence un organe de sélection de pression permettant non seulement de régler la pression de cuisson mais également de commander la décompression de l'appareil 1.

L'appareil 1 de cuisson d'aliments sous pression conforme à l'invention comprend avantageusement un moyen de régulation de pression 5 monté en communication étanche avec un perçage correspondant (non représenté) ménagé dans le couvercle 3 et agencé pour maintenir la pression relative (c'est-à-dire la pression mesurée au-dessus de la pression atmosphérique) régnant dans l'enceinte à une valeur prédéterminée sensiblement constante, dite pression de fonctionnement. Le principe de fonctionnement général d'un tel moyen de régulation 5 est bien connu dans le domaine, de sorte qu'il n'est pas nécessaire de le décrire plus avant ici. Avantageusement, le moyen de régulation 5 est pourvu d'un système de tarage permettant à l'utilisateur de sélectionner une valeur de pression de fonctionnement prédéterminée, correspondant à une position de cuisson spécifique du deuxième organe 9, parmi un choix de plusieurs niveaux de pression de fonctionnement, via le deuxième organe de commande 9, en fonction par exemple de la nature des aliments présents dans l'appareil 1.

Avantageusement, le deuxième organe 9 interagit avec la soupape et le système de tarage du moyen de régulation 5 de façon :
- qu'à chaque position de cuisson corresponde un tarage spécifique de ladite soupape et donc une pression de fonctionnement prédéterminée spécifique,
- et que la position d'ouverture corresponde à un soulèvement de la soupape hors de son siège afin de mettre en communication permanente l'intérieur de l'enceinte de cuisson avec l'extérieur, selon une section de fuite suffisante pour non seulement dépressuriser l'appareil mais également l'empêcher de monter en pression au-delà d'une pression de sécurité prédéterminée compatible avec l'ouverture sécurisée du couvercle 3.

Une telle interaction entre d'une part un organe (le deuxième organe 9) permettant d'agir sur le niveau de pression et d'autre part un moyen de régulation 5 et son système de tarage est bien connue en tant que telle, et ne sera donc pas décrite plus avant ici. A titre indicatif, une telle interaction entre le deuxième organe 9, le moyen de régulation 5 et son système de tarage peut être par exemple conforme à l'enseignement de la demande de brevet français publiée sous le numéro FR-2 899 454 (déposée sous numéro FR-06 03207), le deuxième organe 9 décrit ici correspondant au sélecteur rotatif 37 et à sa pièce de commande 28 décrits dans le document FR-2 899 454 en question.

Avantageusement, le deuxième organe 9 est monté à rotation sur le couvercle 3, selon un axe de rotation, entre ses positions d'ouverture et de cuisson. De préférence, l'axe de rotation en question est sensiblement perpendiculaire à l'axe de pivotement Y-Y', et est avantageusement confondu avec l'axe vertical X-X'. Avantageusement, l'anse 6A formant premier organe 6 est ainsi montée à pivotement selon l'axe Y-Y' sur une platine circulaire 10 elle-même rapportée et fixée sur le couvercle 3, le deuxième organe 9 étant quant à lui avantageusement formé d'une couronne circulaire 9A montée de façon concentrique à l'axe X-X' et à la platine 10, ladite couronne circulaire 9A pouvant ainsi tourner autour de l'axe X-X' parallèlement au plan moyen d'extension du couvercle 3. Afin de permettre à un utilisateur de faire facilement tourner la couronne 9A formant deuxième organe 9 entre ses positions d'ouverture et de cuisson, le deuxième organe 9 est avantageusement pourvu d'un bouton de commande 9B, attaché à la couronne 9A et destiné à être saisi manuellement par l'utilisateur de façon à ce que ce dernier puisse par son intermédiaire entraîner en rotation la couronne 9A autour de son axe de rotation X-X'. De préférence, le deuxième organe 9 est conçu pour être solidaire en permanence du couvercle 3, tout en étant mobile relativement à ce dernier.

Conformément à l'invention, les premier et deuxième organes 6, 9 sont mobiles l'un relativement à l'autre, et sont de façon encore plus préférentielle chacun mobile relativement au couvercle 3, comme exposé dans ce qui précède. Les premier et deuxième organes 6, 9 sont ainsi distincts, c'est-à-dire qu'ils sont formés par au moins deux pièces différentes que l'utilisateur doit actionner séparément pour piloter la fonction concernée.

Conformément à l'invention, les premier et deuxième organes 6, 9 interagissent, de préférence directement, l'un avec l'autre pour que leur faculté de mobilité relative dépende au moins en partie (de préférence directement) de leur position l'un par rapport à l'autre. En d'autres termes, les premier et deuxième organes 6, 9 ne fonctionnent pas totalement indépendamment l'un de l'autre, et coopèrent pour qu'au moins une position de l'un d'entre eux (premier organe 6 ou deuxième organe 9) conditionne le fonctionnement de l'autre (deuxième organe 9, premier organe 6). Ainsi, la mobilité du premier organe 6 pourra être restreinte lorsque le deuxième organe 9 se trouve dans une position prédéterminée, ou réciproquement la mobilité du deuxième organe 9 pourra être restreinte lorsque le premier organe 6 se trouve lui-même dans une position prédéterminée. En d'autres termes, les premier et deuxième organes 6, 9 interagissent avantageusement pour qu'au moins certaines de leurs positions respectives soient interdépendantes. Grâce à cette mesure technique, l'invention permet d'éviter des combinaisons anormales de positions des premier et deuxième organes 6, 9, c'est-à-dire des positions relatives desdits premier et deuxième organes 6, 9 qui sont incompatibles avec une utilisation normale, sécurisée, de l'appareil 1. En d'autres termes, l'invention prévoit une liaison fonctionnelle entre les premier et deuxième organes 6, 9 permettant d'éviter à l'utilisateur d'effectuer des manoeuvres non prévues, tout en laissant malgré tout la faculté à l'utilisateur de commander indépendamment le verrouillage / déverrouillage du couvercle 3 d'une part et la sélection de pression d'autre part, avec tous les avantages fonctionnels qui découlent d'une telle commande différenciée.

Dans un mode de réalisation particulièrement avantageux illustré aux figures, les premier et deuxième organes 6, 9 interagissent pour que lorsque le premier organe 6 est en position de verrouillage et que le deuxième organe 9 est en position de cuisson (situation illustrée aux figures 4 et 5), le premier organe 6 soit empêché d'atteindre sa position de déverrouillage, et ce quel que soit le niveau de pression régnant dans l'enceinte de cuisson. Cela signifie que le deuxième organe 9, lorsqu'il est en position de cuisson (c'est-à-dire dans l'une de ses positions de cuisson s'il en possède plusieurs, chacune correspondant à un niveau spécifique de tarage de la soupape de régulation), empêche le premier organe 6 de revenir en position de déverrouillage à partir de sa position de verrouillage. De façon préférentielle, les premier et deuxième organes 6, 9 interagissent pour que lorsque le premier organe 6 est en position de verrouillage et le deuxième organe 9 est en position de cuisson, le premier organe 6 soit sensiblement immobilisé dans sa position de verrouillage par le deuxième organe 9. Grâce à cette disposition technique, l'utilisateur est protégé contre un déverrouillage intempestif du couvercle 3, alors que l'appareil 1 est théoriquement susceptible d'être pressurisé puisque le deuxième organe 9 est en position de cuisson.

Cela limite les risques pour l'utilisateur et permet en outre d'alléger la conception générale de l'appareil 1, puisque la résistance à un éventuel effort intempestif de déverrouillage qui serait exercée par l'utilisateur sur le premier organe 6 est désormais reprise, au moins en partie et de préférence en totalité, par le deuxième organe 9 qui bloque par lui-même le mouvement du premier organe 6.

Avantageusement, les premier et deuxième organes 6, 9 interagissent pour que lorsque le premier organe 6 est en position de verrouillage, le deuxième organe 9 puisse passer librement de sa position d'ouverture à sa position de cuisson. En d'autres termes, le deuxième organe 9 reste avantageusement libre de se déplacer entre ses différentes positions lorsque le premier organe 6 est en position de verrouillage. Ceci permet à l'utilisateur, une fois qu'il a verrouillé le couvercle 3 sur la cuve 2, de pouvoir sélectionner comme il l'entend le mode de fonctionnement de l'appareil 1, sans avoir à déverrouiller le couvercle 3 entre chaque changement de position du deuxième organe 9.

Avantageusement, les premier et deuxième organes 6, 9 interagissent pour que lorsque le premier organe 6 est en position de déverrouillage et que le deuxième organe 9 est en position d'ouverture, le deuxième organe 9 soit empêché, de préférence directement par le premier organe 9, d'atteindre sa position de cuisson. Grâce à cette caractéristique, l'utilisateur est dans l'impossibilité de placer le deuxième organe 9 en position de cuisson, alors que le couvercle 3 n'est pas dûment verrouillé sur la cuve 2. Ceci évite à l'utilisateur de penser avoir correctement lancé un cycle de cuisson, parce qu'il a sélectionné, avec le deuxième organe 9, la position de cuisson, alors que tel n'est pas le cas car le couvercle 3 n'est pas verrouillé sur la cuve 2.

Avantageusement, les premier et deuxième organes 6, 9 interagissent pour que le premier organe 6 ne puisse atteindre sa position de déverrouillage à partir de sa position de verrouillage que lorsque le deuxième organe 9 est en position d'ouverture. Grâce à cette disposition, qui va avantageusement de pair avec le blocage en position de verrouillage du premier organe 6 par le deuxième organe 9 en position de cuisson, la sécurité de l'utilisateur est améliorée puisque le déverrouillage n'est possible que lorsque l'appareil se trouve dans une configuration dans laquelle la pression régnant dans l'enceinte de cuisson est ramenée ou maintenue à une valeur compatible avec le déverrouillage sécurisé du couvercle 3.

De façon préférentielle, les premier et deuxième organes 6, 9 interagissent pour que le premier organe 6 ne puisse atteindre sa position de verrouillage à partir de sa position de déverrouillage que lorsque le deuxième organe 9 est en position d'ouverture.

La structure et le fonctionnement du mode de réalisation préféré illustré aux figures va maintenant être décrit plus en détails.

Ce mode de réalisation met en oeuvre toutes les différentes caractéristiques et fonctionnalités décrites dans ce qui précède.

Dans ce mode de réalisation préféré, le premier organe 6 est pourvu d'un rebord 8B s'étendant sensiblement en arc de cercle, l'axe de rotation du deuxième organe 9, confondu en l'espèce avec l'axe X-X', passant sensiblement par le centre dudit arc de cercle. De préférence, le rebord 8B s'étend sensiblement parallèlement au couvercle 3 lorsque le premier organe 6 se trouve dans sa position de verrouillage, comme illustré par exemple par la figure 2. De façon préférentielle, l'organe de commande 6, constitué en l'occurrence par l'anse 6A hémicirculaire, est pourvu d'une gorge 8 qui suit le contour de l'anse 6A et qui s'étend donc sensiblement en arc de cercle, et de préférence selon un demi-cercle comme illustré. La gorge 8 permet de faciliter la préhension de l'anse 6A par l'utilisateur lorsque l'anse 6A est en position de verrouillage. La gorge 8 est de préférence délimitée par le rebord 8B précité, qui forme un rebord inférieur, et un rebord supérieur 8A, les rebords inférieurs 8B et supérieur 8A étant sensiblement parallèles et continus, perpendiculaires au fond de la gorge 8.

Comme illustré aux figures, le rebord 8B présente une échancrure 8C, c'est-à-dire que ledit rebord 8B est découpé, de préférence vers son milieu (ce dernier correspondant au sommet de l'anse 6A).

Le deuxième organe 9 est quant à lui avantageusement pourvu d'un verrou 11. Le verrou 11 est de préférence attaché de façon fixe à la couronne 9A constituant le deuxième organe 9. Le verrou 11 est donc avantageusement embarqué sur le deuxième organe 9, et tourne donc avec ce dernier autour de l'axe X-X'. De façon préférentielle, et comme illustré aux figures, le verrou 11 est formé par le bouton de commande 9B, de sorte que ce dernier assume une double fonction, savoir une fonction de transmission de l'effort de commande exercé manuellement par l'utilisateur sur la couronne 9A, et une fonction de coopération avec le premier organe 6 et plus précisément avec l'échancrure 8C et le bord 8B, qui va être décrit plus en détails dans ce qui suit.

Avantageusement, les premier et deuxième organes 6, 9 sont conçus pour que le verrou 11 passe à travers l'échancrure 8C lorsque :
- le deuxième organe 9 se trouve dans sa position d'ouverture
- et que le premier organe 6 passe de sa position de déverrouillage à sa position de verrouillage, le verrou 11 pouvant alors, une fois le premier organe 6 en position de verrouillage, passer de sa position d'ouverture à sa position de cuisson.

En d'autres termes, le premier organe 6 est conformé pour que lorsqu'il est rabattu, à partir de sa position de déverrouillage, vers et jusqu'à sa position de verrouillage, le verrou 11 puisse pénétrer dans la gorge 8 au moment où le premier organe 6 atteint sa position de verrouillage.

L'appareil 1 se trouvera alors dans une configuration illustrée aux figures 1 et 2, dans laquelle le premier organe 6 se trouve dans sa position de verrouillage, tandis que le verrou 11 est inséré, au moins en partie, dans la gorge 8. Une fois dans la gorge 8, le verrou 11 peut coulisser, selon une trajectoire circulaire autour de l'axe X-X', le long de la gorge 8, en surplombant le rebord inférieur 8B, jusqu'à sa position de cuisson. Le rebord inférieur 8B est alors interposé, dès que le deuxième organe 9 a quitté sa position d'ouverture, entre la platine 10 fixée au couvercle 3 et le verrou 11. Ceci interdit à l'anse 6A de pivoter vers sa position de déverrouillage, l'anse 6A étant ainsi immobilisée en position par le verrou 11 lorsque ce dernier ne se trouve plus en regard de l'échancrure 8C, c'est-à-dire lorsque le deuxième organe 9 a pivoté autour de l'axe X-X' pour quitter sa position d'ouverture et rejoindre sa position de cuisson (ou l'une de ses positions de cuisson). Ainsi, dès que le deuxième organe 9 se trouve en dehors de sa position d'ouverture, le premier organe 6 est bloqué par le deuxième organe 9 en position de verrouillage. En revanche, comme exposé dans ce qui précède, le verrou 11 peut quant à lui librement se déplacer dans la gorge 8, ce qui autorise le deuxième organe 9 à circuler librement entre ses différentes positions lorsque le premier organe 6 est en position de verrouillage. Le verrou 11 constitue donc, une fois que le deuxième organe 9 est en position de cuisson et alors que le premier organe 6 est en position de verrouillage, une butée de blocage pour ledit rebord 8B, empêchant le premier organe 6 d'atteindre sa position de déverrouillage à partir de sa position à verrouillage. En d'autres termes, la conformation circulaire du premier organe 6 et plus précisément de sa gorge 8, permet de créer un chemin de guidage pour le verrou 11, de sorte qu'un blocage du premier organe 6 en position de verrouillage peut être obtenu. Un tel blocage s'avère particulièrement fiable et simple à mettre en oeuvre et peut éviter le recours à un surdimensionnement mécanique d'autres pièces pour des raisons de sécurité à l'ouverture. Grâce à ce principe de blocage, le premier organe 6 ne peut avantageusement passer de sa position de verrouillage à sa position de déverrouillage que lorsque le verrou 11 se trouve en regard de l'échancrure 8C, c'est-à-dire lorsque le deuxième organe 9 est en position d'ouverture.

Le fonctionnement de la variante particulière illustré aux figures va maintenant être décrit chronologiquement.

Tout d'abord, l'appareil 1 est en configuration de cuisson, c'est-à-dire que son couvercle 3 est rapporté et verrouillé, grâce au moyen de verrouillage / déverrouillage 4, sur la cuve 2. Dans cette configuration, illustrée aux figures 4 et 5, le premier organe 6, comprenant en l'espèce l'anse 6A, se trouve en position de verrouillage, et est immobilisé dans cette position par le verrou 11. Dans cette configuration, l'utilisateur ne peut faire pivoter l'anse 6A pour la ramener en position de déverrouillage, car le verrou 11 immobilise en position de verrouillage l'anse 6A. A la fin du cycle de cuisson, l'utilisateur fait pivoter le deuxième organe 9 autour de l'axe X-X' pour ramener ledit deuxième organe 9 dans sa position d'ouverture (illustrée aux figures 1 et 2) ce qui entraîne le soulèvement de la soupape de régulation formant moyen de régulation 5 hors de son siège et ainsi la dépressurisation de l'appareil 1 par mise en communication de l'intérieur de l'enceinte de cuisson avec l'extérieur. Dans cette configuration, illustrée aux figures 1 et 2, le verrou 11 se trouve en regard de l'échancrure 8C ménagée dans le rebord inférieur 8B. Il est alors possible à l'utilisateur, et sous réserve que d'autres moyens de sécurité à l'ouverture l'y autorisent en fonction de la pression régnant dans l'enceinte de cuisson, de ramener l'anse 6A dans sa position de déverrouillage, par pivotement selon une course angulaire de 90° autour de l'axe de pivotement Y-Y'. Ce trajet de la position de verrouillage vers la position de déverrouillage est illustré à la figure 6. La rotation de l'anse 6A entraîne la rotation concomitante d'une paire de cames 12, 13 montées respectivement aux première et deuxième extrémités 60, 61 de l'anse 6A. Chaque came 12, 13 vient ainsi pousser sur une pièce intermédiaire de commande 14 montée à translation sur la platine 10 selon un axe sensiblement perpendiculaire à la fois à l'axe de pivotement Y-Y' et à l'axe de symétrie global X-X'.

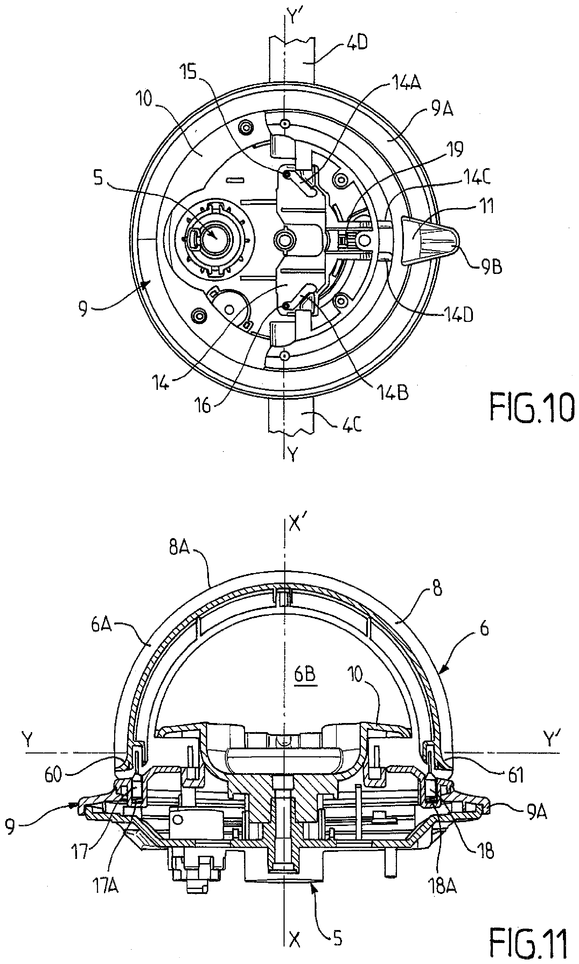

La pièce intermédiaire de commande 14 est ainsi repoussée par les cames 12, 13 sous l'effet du pivotement du premier organe 6 de sa position de verrouillage vers sa position de déverrouillage. Afin de garantir un contact permanent entre les cames 12, 13 et la plaque de commande intermédiaire 14, cette dernière est soumise à l'action d'un ressort de rappel 19 (représenté uniquement sur les vues de dessus des figures 3, 7, 10 et 14) qui pousse en permanence la plaque intermédiaire de commande 14 contre lesdites cames 12, 13. La pièce de commande 14 est pourvue classiquement de lumières obliques 14A, 14B coopérant avec des ergots 15, 16 reliés respectivement aux bras entraîneurs 4C, 4D, vers l'extrémité intérieure de ces derniers. Ainsi, le déplacement en translation de la plaque de commande intermédiaire 14 entraîne, par l'intermédiaire des lumières 14A, 14B, le déplacement radial des ergots 15, 16, et donc des bras entraîneurs 4C, 4D auxquels ces derniers sont respectivement attachés. Un tel principe de commande du déplacement radial des bras entraîneurs 4C, 4D est bien connu en tant que tel, et est par exemple décrit dans le document FR-2 863 849 A1, dont le contenu est incorporé par référence. Ainsi, la plaque intermédiaire de commande 14 repousse, par ses lumières 14A, 14B, les bras entraîneurs 4C, 4D vers l'extérieur, de façon radiale centrifuge, ce qui écarte les mâchoires 4A, 4B du bord roulé de la cuve 2. Le trajet de l'anse 6A se poursuit jusqu'à ce que l'anse 6A atteigne une position de butée (cf. figures 10 et 11) dans laquelle ladite anse 6A s'étend verticalement au droit du couvercle 3. Cette position correspond à l'écartement mutuel maximal des mâchoires 4A, 4B, écartement qui correspond à la position de déverrouillage. Cette position déployée de l'organe de commande 6 est avantageusement une position stable, grâce à l'action de pions verticaux coulissants 17, 18 qui pénètrent dans une contre-forme appropriée ménagée dans l'anse 6A, vers l'extrémité correspondante 60, 61 de cette dernière.

A cette fin, chaque pion 17, 18 est monté à translation verticale sur la platine 10 et est soumis à l'action d'un ressort de rappel correspondant 17A, 18A qui pousse en permanence chaque pion 17, 18 contre l'anse 6A.

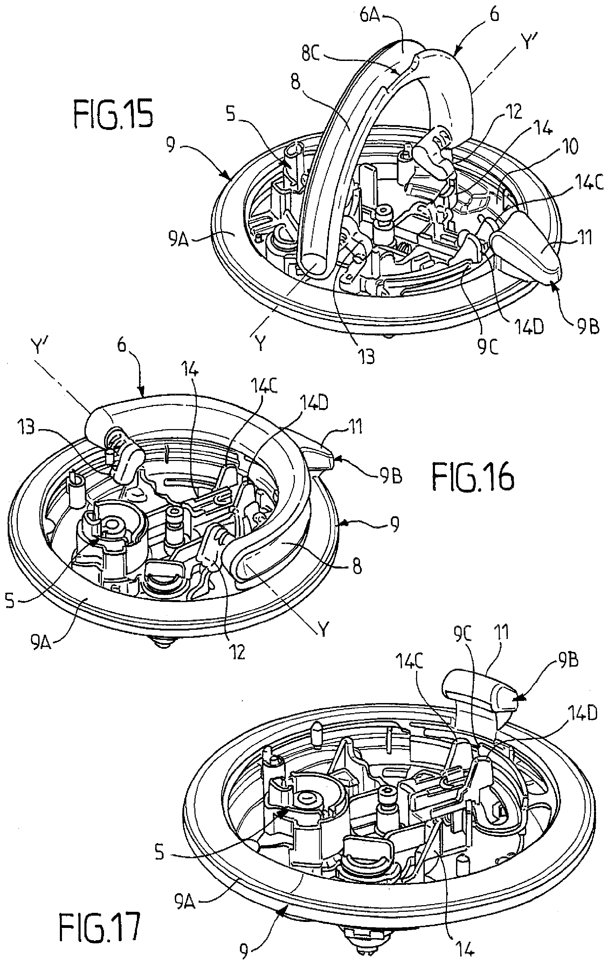

A la position déployée de l'anse 6A correspond une position repoussée de la plaque intermédiaire de commande 14 dans laquelle ladite plaque 14 vient interférer avec la trajectoire circulaire autour de l'axe X-X' d'une pièce de blocage 9C solidaire de la couronne 9A (cf. figure 15). Ainsi, toute tentative de faire tourner la couronne 9A vers la position de cuisson alors que l'anse 6A est en position de déverrouillage entraîne la mise en butée de la pièce de blocage 9C contre la plaque 14, comme illustré à la figure 15, la couronne 9A étant de ce fait empêchée de quitter sa position d'ouverture.

De préférence, la pièce de blocage 9C est constituée par le bord d'une nervure verticale s'étendant concentriquement à la couronne 9A, à l'intérieur de cette dernière, le bord en question venant en appui de blocage contre la face latérale d'une nervure verticale 14D solidaire de la plaque intermédiaire 14.

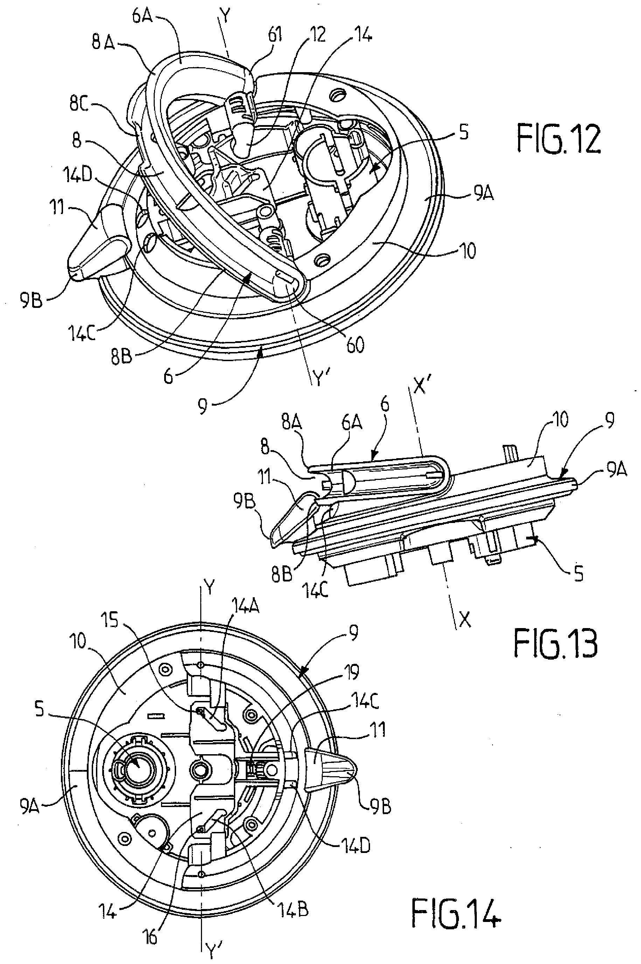

L'utilisateur peut ensuite saisir avec l'une de ses mains l'arche 6A, de façon ferme et assurée, et soulever ainsi le couvercle 3 pour le dissocier de la cuve 2. Il est bien entendu tout à fait loisible à l'utilisateur, afin de faciliter le rangement du couvercle 3 ou son placement dans un lave-vaisselle, de rabattre ensuite l'anse 6A. A cette fin, l'utilisateur ramène l'anse 6A à partir de sa position de déverrouillage jusqu'à sa position de verrouillage. Ce trajet est illustré par les figures 12 et 13. Durant la quasi-totalité de ce trajet de repliement de l'anse 6A contre le couvercle 3, les cames 12, 13 ne sont de préférence plus en contact avec la plaque intermédiaire de commande 14 qui est restée bloquée dans sa position illustrée à la figure 10, correspondant au déverrouillage du couvercle 3. Cet effet de blocage est obtenu par une conformation appropriée des lumières 14A, 14B bien connue en tant que telle et qui ne nécessite donc pas d'être décrite plus avant ici.

A l'approche de sa position rétractée, comme illustré à la figure 13, l'anse 6A vient appuyer sur une gâchette constituée en l'espèce de deux nervures arrondies 14C, 14D solidaires de la plaque intermédiaire de commande 14. L'anse 6A, en appuyant sur ces nervures 14C, 14D, repousse la plaque de commande intermédiaire 14 hors de sa position stable de sorte que sous l'effet de l'action du ressort 19 et de celle du ressort rappelant les bras entraîneurs l'un vers l'autre, la plaque de commande intermédiaire 14 est brutalement propulsée jusque dans sa position correspondant au verrouillage des mâchoires 4A, 4B.

### POSSIBILITE D'APPLICATION INDUSTRIELLE

L'invention trouve son application industrielle dans la conception, la fabrication et l'utilisation d'appareils de cuisson, en particulier d'appareils de cuisson sous pression du genre autocuiseurs.

## Revendications

1. Appareil (1) de cuisson d'aliments sous pression comprenant :
- une cuve (2) et un couvercle (3) destinés à former une enceinte de cuisson,
- un premier organe (6) permettant à un utilisateur de commander le verrouillage / déverrouillage du couvercle (3) relativement à la cuve (2), ledit premier organe (6) étant mobile relativement au couvercle (3) entre au moins une position de verrouillage du couvercle (3) et une position de déverrouillage du couvercle (3),
- et un deuxième organe (9) permettant à un utilisateur d'agir sur le niveau de pression dans l'appareil (1), ledit deuxième organe (9) étant mobile relativement au couvercle (3) entre au moins d'une part une position d'ouverture permettant de ramener ou de maintenir la pression régnant dans l'enceinte de cuisson formée par la cuve (2) et le couvercle (3) à une valeur compatible avec un déverrouillage sécurisé du couvercle (3) et d'autre part une position de cuisson autorisant une montée en pression de ladite enceinte de cuisson jusqu'à une valeur de pression incompatible avec un déverrouillage sécurisé du couvercle (3)
lesdits premier et deuxième organes (6, 9) étant mobiles l'un relativement à l'autre,
**caractérisé en ce que** les premier et deuxième organes (6, 9) interagissent l'un avec l'autre pour que leur faculté de mobilité relative dépende au moins en partie de leur position l'un par rapport à l'autre, lesdits premiers et deuxième organes (6, 9) interagissant pour que lorsque le premier organe (6) est en position de verrouillage et le deuxième organe (9) est en position de cuisson, le premier organe (6) soit empêché d'atteindre sa position de déverrouillage par le deuxième organe (9) qui bloque par lui-même le mouvement du premier organe (6), ledit deuxième organe (9) étant monté à rotation sur le couvercle (3), selon un axe de rotation (X-X'), entre ses positions d'ouverture et de cuisson.

2. Appareil (1) selon la revendication 1, **caractérisé en ce que** les premiers et deuxième organes (6, 9) interagissent pour que lorsque le premier organe (6) est en position de verrouillage, le deuxième organe (9) peut passer librement de sa position d'ouverture à sa position de cuisson.

3. Appareil (1) selon la revendication 1 ou 2, **caractérisé en ce que** les premiers et deuxième organes (6, 9) interagissent pour que lorsque le premier organe (6) est en position de déverrouillage et le deuxième organe (9) est en position d'ouverture, le deuxième organe (9) soit empêché d'atteindre sa position de cuisson.

4. Appareil (1) selon l'une des revendications 1 à 3, **caractérisé en ce que** les premiers et deuxième organes (6, 9) interagissent pour que le premier organe (6) ne puisse atteindre sa position de verrouillage à partir de sa position de déverrouillage que lorsque le deuxième organe (9) est en position d'ouverture.

5. Appareil (1) selon l'une des revendications 1 à 4, **caractérisé en ce que** les premiers et deuxième organes (6, 9) interagissent pour que le premier organe (6) ne puisse atteindre sa position de déverrouillage à partir de sa position de verrouillage que lorsque le deuxième organe (9) est en position d'ouverture.

6. Appareil (1) selon l'une des revendications 1 à 5, **caractérisé en ce que** le premier organe (6) est monté à pivotement sur le couvercle (3), selon un axe de pivotement (Y-Y'), entre ses positions de verrouillage et de déverrouillage.

7. Appareil (1) selon la revendication 6 **caractérisé en ce que** ledit axe de pivotement (Y-Y') s'étend selon une direction moyenne majoritairement parallèle au plan moyen d'extension du couvercle (3).

8. Appareil (1) selon la revendication 6 ou 7 **caractérisé en ce que** ledit axe de rotation (X-X') est sensiblement perpendiculaire audit axe de pivotement (Y-Y').

9. Appareil (1) selon la revendication 8 **caractérisé en ce que** le premier organe (6) est pourvu d'un rebord (8B) s'étendant sensiblement en arc de cercle, ledit axe de rotation (X-X') passant sensiblement par le centre dudit arc de cercle, ledit rebord (8B) présentant une échancrure (8C), le deuxième organe (9) étant quant à lui pourvu d'un verrou (11), les premier et deuxième organes (6, 9) étant conçus pour que :
- le verrou (11) passe à travers l'échancrure (8C) lorsque le deuxième organe (9) se trouve dans sa position d'ouverture et que le premier organe (6) passe de sa position de déverrouillage à sa position de verrouillage, le verrou (11) pouvant alors, une fois le premier organe (6) en position de verrouillage, passer de sa position d'ouverture à sa position de cuisson,
- et le verrou (11) constitue, une fois que le deuxième organe (9) est en position de cuisson et alors que le premier organe (6) est en position de verrouillage, une butée de blocage pour ledit rebord (8B), empêchant le premier organe (6) d'atteindre sa position de déverrouillage à partir de sa position de verrouillage.

## Patentansprüche

1. Gerät (1) zum Kochen von Nahrungsmitteln unter Druck, umfassend:
- eine Wanne (2) und einen Deckel (3), die dazu bestimmt sind, einen Kochraum zu bilden,
- ein erstes Element (6), das es einem Benutzer ermöglicht, die Verriegelung/Entriegelung des Deckels (3) in Bezug zur Wanne (2) zu steuern, wobei das erste Element (6) in Bezug zum Deckel (3) zwischen mindestens einer Verriegelungsposition des Deckels (3) und einer Entriegelungsposition des Deckels (3) beweglich ist,
- und ein zweites Element (9), das es einem Benutzer ermöglicht, auf das Druckniveau in dem Gerät (1) einzuwirken, wobei das zweite Element (9) in Bezug zum Deckel (3) beweglich ist zwischen mindestens einerseits einer Öffnungsposition, die es ermöglicht, den in dem von der Wanne (2) und dem Deckel (3) gebildeten Kochraum herrschenden Druck auf einen Wert zurückzuführen oder auf einem Wert zu halten, der mit einer gesicherten Entriegelung des Deckels (3) vereinbar ist, und andererseits einer Kochposition, die einen Druckanstieg des Kochraums bis zu einem Druckwert gestattet, der mit einer gesicherten Entriegelung des Deckels (3) nicht vereinbar ist,
wobei das erste und zweite Element (6, 9) relativ zueinander beweglich sind,
**dadurch gekennzeichnet, dass** das erste und zweite Element (6, 9) miteinander interagieren, so dass ihr relatives Bewegungsvermögen zumindest teilweise von ihrer Position zueinander abhängt, wobei das erste und zweite Element (6, 9) interagieren, so dass, wenn das erste Element (6) in Verriegelungsposition und das zweite Element (9) in Kochposition ist, das erste Element (6) durch das zweite Element (9), das selbst die Bewegung des ersten Elements (6) blockiert, daran gehindert wird, seine Entriegelungsposition zu erreichen, wobei das zweite Element (9) entlang einer Rotationsachse (X-X') drehbar auf dem Deckel (3) zwischen seiner Öffnungs- und Kochposition montiert ist.

2. Gerät (1) nach Anspruch 1, **dadurch gekennzeichnet, dass** das erste und zweite Element (6, 9) interagieren, so dass, wenn das erste Element (6) in Verriegelungsposition ist, das zweite Element (9) frei von seiner Öffnungsposition in seine Kochposition übergehen kann.

3. Gerät (1) nach Anspruch 1 oder 2, **dadurch gekennzeichnet, dass** das erste und zweite Element (6, 9) interagieren, so dass, wenn das erste Element (6) in Entriegelungsposition ist, und das zweite Element (9) in Öffnungsposition ist, das zweite Element (9) daran gehindert wird, seine Kochposition zu erreichen.

4. Gerät (1) nach einem der Ansprüche 1 bis 3, **dadurch gekennzeichnet, dass** das erste und zweite Element (6, 9) interagieren, so dass das erste Element (6) seine Verriegelungsposition aus seiner Entriegelungsposition nur dann erreichen kann, wenn das zweite Element (9) in Öffnungsposition ist.

5. Gerät (1) nach einem der Ansprüche 1 bis 4, **dadurch gekennzeichnet, dass** das erste und zweite Element (6, 9) interagieren, so dass das erste Element (6) seine Entriegelungsposition aus seiner Verriegelungsposition nur dann erreichen kann, wenn das zweite Element (9) in Öffnungsposition ist.

6. Gerät (1) nach einem der Ansprüche 1 bis 5, **dadurch gekennzeichnet, dass** das erste Element (6) schwenkbar auf dem Deckel (3) entlang einer Schwenkachse (Y-Y') zwischen seiner Verriegelungs- und Entriegelungsposition montiert ist.

7. Gerät (1) nach Anspruch 6, **dadurch gekennzeichnet, dass** sich die Schwenkachse (Y-Y') entlang einer mittleren Richtung weitgehend parallel zu der mittleren Ausdehnungsebene des Deckels (3) erstreckt.

8. Gerät (1) nach Anspruch 6 oder 7, **dadurch gekennzeichnet, dass** die Rotationsachse (X-X') im Wesentlichen senkrecht auf der Schwenkachse (Y-Y') ist.

9. Gerät (1) nach Anspruch 8, **dadurch gekennzeichnet, dass** das erste Element (6) mit einem Rand (8B) versehen ist, der sich im Wesentlichen kreisbogenförmig erstreckt, wobei die Rotationsachse (X-X') im Wesentlichen durch den Mittelpunkt des Kreisbogens verläuft, wobei der Rand (8B) eine Aussparung (8C) aufweist, wobei das zweite Element (9) seinerseits mit einem Riegel (11) versehen ist, wobei das erste und zweite Element (6, 9) eingerichtet sind, dass:
- der Riegel (11) durch die Aussparung (8C) verläuft, wenn sich das zweite Element (9) in seiner Öffnungsposition befindet, und das erste Element (6) von seiner Entriegelungsposition in seine Verriegelungsposition übergeht, wobei der Riegel (11) nun, wenn sich das erste Element (6) in Verriegelungsposition befindet, von seiner Öffnungsposition in seine Kochposition übergehen kann,
- und der Riegel (11), wenn sich das zweite Element (9) in Kochposition befindet, und während sich das erste Element (6) in Verriegelungsposition befindet, einen Blockieranschlag für den Rand (8B) darstellt, der das erste Element (6) daran hindert, seine Entriegelungsposition von seiner Verriegelungsposition zu erreichen.

## Claims

1. A utensil (1) for cooking food under pressure, which utensil comprises:
- a vessel (2) and a lid (3) designed to form a cooking enclosure,
- a first member (6) enabling a user to lock/unlock the lid (3) relative to the vessel (2), said first member (6) being mounted to move relative to the lid (3) between at least a locking position for locking the lid (3) and an unlocking position for unlocking the lid (3),
- and a second member (9) enabling a user to act on the pressure level inside the utensil (1), said second member (9) being mounted to move relative to the lid (3) between at least firstly an opening position enabling the pressure prevailing inside the cooking enclosure formed by the vessel (2) and by the lid (3) to be brought back to or to be maintained at a value compatible with safe unlocking of the lid (3), and secondly a cooking position allowing pressure to build up inside said cooking enclosure to a pressure value incompatible with safe unlocking of the lid (3),
said first and second members (6, 9) being mounted to move relative to each other,
**characterized in that** the first and second members (6, 9) interact with each other so that their ability to move relative to each other depends at least in part on their positions relative to each other, the first and second members (6, 9) interacting so that, when the first member (6) is in the locking position and when the second member (9) is in the cooking position, the first member (6) is prevented from reaching its unlocking position by the second member (9) that blocks, by itself, movement of the first member (6), the second member (9) being mounted to turn on the lid (3), about an axis of rotation (X-X'), between its opening position and its cooking position(s).

2. A utensil (1) according to claim 1, **characterized in that** the first and second members (6, 9) interact so that, when the first member (6) is in the locking position, the second member (9) can go freely from its opening position to its cooking position.

3. A utensil (1) according to claim 1 or 2, **characterized in that** the first and second members (6, 9) interact so that, when the first member (6) is in the unlocking position and when the second member (9) is in the opening position, the second member (9) is prevented from reaching its cooking position.

4. A utensil (1) according to any one of claims 1 to 3, **characterized in that** the first and second members (6, 9) interact so that the first member (6) can reach its locking position from its unlocking position only when the second member (9) is in the opening position.

5. A utensil (1) according to any one of claims 1 to 4, **characterized in that** the first and second members (6, 9) interact so that the first member (6) can reach its unlocking position from its locking position only when the second member (9) is in the opening position.

6. A utensil (1) according to any one of claims 1 to 5, **characterized in that** the first member (6) is mounted to pivot on the lid (3), about a pivot axis (Y-Y'), between its locking position and its unlocking position.

7. A utensil (1) according to claim 6, **characterized in that** said pivot axis (Y-Y') extends in a mean direction that is mainly parallel to the mean plane of extension of the lid (3).

8. A utensil (1) according to claim 6 or 7, **characterized in that** said axis of rotation (X-X') is substantially perpendicular to said pivot axis (Y-Y').

9. A utensil (1) according to claim 8, **characterized in that** the first member (6) is provided with a flange (8B) extending substantially in a circular arc, said axis of rotation (X-X') passing substantially through the center of said circular arc, said flange (8B) having a notch (8C), the second member (9) being provided with a latch (11), and the first and second members (6, 9) being designed so that:
- the latch (11) passes through the notch (8C) when the second member (9) is in its opening position and when the first member (6) goes from its unlocking position to its locking position, it being possible, once the first member (6) is in the locking position, for the latch (11) then to go from its opening position to its cooking position; and
- once the second member (9) is in the cooking position, and when the first member (6) is in the locking position, the latch (11) constitutes a blocking abutment for said flange (8B), preventing the first member (6) from reaching its unlocking position from its locking position.
